# EUROPEAN PATENT SPECIFICATION

(11) **EP 2 458 661 B1**
(45) Date of publication and mention of the grant of the patent: **05.08.2015**
(21) Application number: 11190646.7
(22) Date of filing: 24.11.2011
(51) Int. Cl.: H01M 4/38, H01M 4/48, H01M 4/134, H01M 4/1395, H01M 4/131, H01M 4/1391, H01M 4/36

(54) **Negative active material for rechargeable lithium battery, method of producing negative electrode and rechargeable lithium battery including the same**
Negativ-Aktivmaterial für eine wiederaufladbare Lithiumbatterie, Herstellungsverfahren für die negative Elektrode und wiederaufladbare Lithiumbatterie damit
Matériau actif négatif pour batterie au lithium rechargeable, procédé de préparation de l'électrode négative et batterie au lithium rechargeable les comprenant

(30) Priority: 25.11.2010 KR 20100118333
(43) Date of publication of application: 30.05.2012
(73) Proprietor: Samsung SDI Co., Ltd., Yongin-si, Gyeonggi-do (KR)
(72) Inventor: Son, Dong-Ho, Yongin-si, Gyeonggi-do (KR); Kim, Ki-Jun, Yongin-si, Gyeonggi-do (KR); Kim, Ihn, Yongin-si, Gyeonggi-do (KR); An, Ho-Yong, Yongin-si, Gyeonggi-do (KR)
(74) Representative: Santarelli

(56) References cited:
- WO-A2-2010/123269
- JP-A- 2001 216 961
- US-A1- 2006 147 797

## Description

### BACKGROUND OF THE INVENTION

### Field of the Invention

This disclosure relates to a negative active material of a rechargeable lithium battery, a method of preparing a negative electrode, and a rechargeable lithium battery including the same.

### Description of the Related Art

Lithium rechargeable batteries have recently drawn attention as a power source for small portable electronic devices. They use an organic electrolyte solution and thereby, have twice the discharge voltage of a conventional battery using an alkali aqueous solution, and accordingly, have higher energy density.

As for positive active materials of a rechargeable lithium battery, there has been research conducted on lithium-transition element composite oxides that can intercalate lithium, such as LiCoO₂ LiMn₂O₄, LiNi₁₋ₓCoₓO₂ (0<x<1), and so on.

As for negative active materials, diverse carbon-based materials capable of intercalating/deintercalating lithium such as artificial graphite, natural graphite, and hard carbon have been used, and at present, graphite-based materials such as artificial graphite and natural graphite are widely employed. Since the graphite-based negative active materials do not reduce lithium metal, an internal short-circuit is not caused by dendrites and thus drawbacks originating from the internal short-circuits are not present.

However, the graphite-based active material has a theoretical lithium occlusion capacity of about 372mAh/g, which accounts for 10% of a theoretical lithium metal capacity, which is very small. Therefore, as a high capacity is required, research is again being conducted on a metal-based negative active material such as Si, which was once used in the initial days of the development of rechargeable batteries.

The metal-based negative active material has high capacity but shows remarkably reduced cycle-life due to large expansion and shrinkage during charge and discharge. An example of a negative electrode for a rechargeable lithium battery comprising a current collector and a negative active material layer formed on the current collector is disclosed in WO 2010/123269.

### SUMMARY OF THE INVENTION

One embodiment of this disclosure provides a negative electrode comprising a negative active material for a rechargeable lithium battery having excellent cycle-life characteristics.

Another embodiment of the present invention provides a manufacturing method of a negative electrode.

Yet another embodiment of the present invention provides a rechargeable lithium battery including the negative electrode.

According to one embodiment of the present invention, a negative electrode for a rechargeable lithium battery comprises a current collector and a negative active material layer formed on the current collector; characterized in that the negative active material layer consists of a negative active material, represented by the following Chemical Formula 1:

Chemical Formula 1 X-Ra-Rb

wherein,
X is an active material which comprises
Si,
SiOₓ (0 < x < 2),
a Si-Q alloy, wherein Q is an element selected from the group consisting of an alkali metal, an alkaline-earth metal, a Group 13 element, a Group 14 element, a Group 15 element, a Group 16 element, a transition element, a rare earth element, and combinations thereof, but is not Si,
Sn,
SnO₂,
a Sn-R alloy wherein R is an element selected from the group consisting of an alkali metal, an alkaline-earth metal, a Group 13 element, a Group 14 element, a Group 15 element, a Group 16 element, a transition element, a rare earth element, and combinations thereof, but is not Sn,
or combinations thereof,
and whose functional group has been reacted with a silane coupling agent;
Ra is a residual group from a silane coupling agent; and
Rb is a polymer including a first repeating unit represented by the following Chemical Formula 2a, 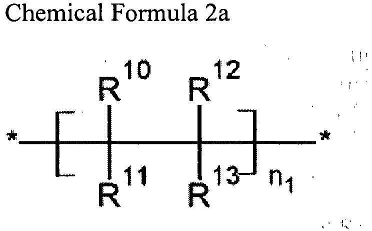 wherein,
R¹⁰ to R¹³ are the same or different, and are hydrogen; or a substituted or unsubstituted C1 to C5 alkyl group, n1 is an integer ranging from 1 to 100000, and * is a chemical bond.

The substituted C1 to C5 alkyl group may be a group in which at least one hydrogen is substituted with an amino group, an acryl group, a vinyl group, an epoxy group, or a phenyl group.

The residual group derived from a silane coupling agent, Ra may be represented by the following Chemical Formula 3.

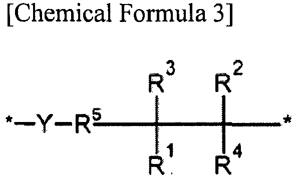

In Chemical Formula 3,
R¹, R² and R³ are the same or different, and are hydrogen; or a substituted or unsubstituted C1 to C5 alkyl group,
R⁴ is a carboxyl group, an amino group, an acryl group, a vinyl group, an epoxy group, or a phenyl group,
R⁵ is a substituted or unsubstituted C1 to C5 alkylene group, and
Y is a silane functional group, and * is a chemical bond.

In one embodiment of the present invention, the polymer of Formula 2a may be a copolymer further including a second repeating unit of the following Chemical Formula 2b along with a first repeating unit. The second repeating unit may be different from the first repeating unit.

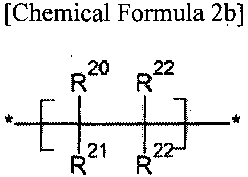

In Chemical Formula 2b,
R²⁰ to R²² are the same or different, and are hydrogen; or a substituted or unsubstituted C1 to C5 alkyl group and * is a chemical bond. The substituted C1 to C5 alkyl group may be a group in which at least one hydrogen is substituted with an amino group, an acryl group, a vinyl group, an epoxy group, or a phenyl group.

The polymer may be a copolymer further including a second repeating unit, and the copolymer may include the first repeating unit and the second repeating unit at a mole ratio of about 0.9 : 0.1 to about 0.1 : 0.9.

According to another embodiment of the present invention, a method of manufacturing a negative electrode for a rechargeable lithium battery is provided, comprising:
mixing a silane coupling agent, a solvent, and water to produce a hydrolysis product;
adding an active material to the hydrolysis product to effect a condensation reaction and to produce a condensation product;
adding a monomer, an oligomer and an initiator to the condensation product to produce a mixture;
coating the mixture on a current collector; and
polymerizing the mixture on the current collector;
wherein the active material comprises:
   Si,
   SiOₓ (0 < x < 2),
   a Si-Q alloy wherein Q is an element selected from the group consisting of an alkali metal, an alkaline-earth metal, a Group 13 element, a Group 14 element, a Group 15 element, a Group 16 element, a transition element, a rare earth element, and combinations thereof, but is not Si,
   Sn,
   SnO₂,
   Sn-R wherein R is an element selected from the group consisting of an alkali metal, an alkaline-earth metal, a Group 13 element, a Group 14 element, a Group 15 element, a Group 16 element, a transition element, a rare earth element, and combinations thereof, but is not Sn,
   or combinations thereof.

The silane coupling agent may be a silane-based compound including a functional group selected from an amino group, an acryl group, a vinyl group, an epoxy group, a phenyl group, or combinations thereof.

The silane coupling agent may include, but is not limited to, at least one selected from 3-methoxysilylpropyl methacrylate, 3-(trimethoxysilyl)propyl methacrylate, 3-ethoxysilylpropyl methacrylate, 3-methoxysilylpropyl acrylate, 3-ethoxysilylpropyl acrylate, 3-methoxysilylbutyl methacrylate, 3-ethoxysilylbutyl methacrylate, 3-methoxysilylbutyl acrylate, 3-ethoxysilylbutyl acrylate, 3-methoxysilylpentyl methacrylate, 3-ethoxysilylpentyl methacrylate, 3-methoxysilylpentyl acrylate, 3-ethoxysilylpentyl acrylate, 3-methoxysilylhexyl methacrylate, 3-ethoxysilylhexyl methacrylate, 3-methoxysilylhexyl acrylate, 3-ethoxysilylhexyl acrylate, 3-methoxysilylheptyl methacrylate, 3-ethoxysilylheptyl methacrylate, 3-methoxysilylheptyl acrylate, 3-ethoxysilylheptyl acrylate, 3-methoxysilyloctyl methacrylate, 3-ethoxysilyloctyl methacrylate, 3-methoxysilyloctyl acrylate, 3-ethoxysilyloctyl acrylate, 3-methoxysilylnonyl methacrylate, 3-ethoxysilylnonyl methacrylate, 3-methoxysilylnonyl acrylate, or 3-ethoxysilylnonyl acrylate, or combinations thereof.

The monomer and the oligomer act as a binder, and examples of monomer and oligomer may include a monomer and an oligomer including at least one of an amino group, an acryl group, a vinyl group, an epoxy group, or a phenyl group.

The active material may be included in about 3000 parts by weight to about 9000 parts by weight based on 100 parts by weight of the silane coupling agent.

In addition, the binder of monomer and oligomer may be mixed in a weight ratio of about 1 : 9 to about 9 : 1.

The polymerization reaction may be performed according to a photo-curing or a thermal curing process.

According to yet another embodiment of the present invention, a rechargeable lithium battery is provided that includes a negative electrode as defined above, a positive electrode including a positive active material, and a non-aqueous electrolyte.

Hereinafter, further embodiments of the present invention will be described in detail.

The negative electrode for a rechargeable lithium battery according to the one embodiment of the present invention has excellent cycle-life characteristics.

### BRIEF DESCRIPTION OF THE DRAWINGS

FIG. 1 shows the structure of a rechargeable lithium battery according to one embodiment of the present invention.
FIG. 2 is a graph showing cycle-life characteristics of half cells using the negative electrodes obtained from Examples 2 to 3 and Comparative Example 1.
FIG. 3 is a flowchart showing the preparation of a negative electrode according to an embodiment of the invention.

### DETAILED DESCRIPTION

Exemplary embodiments of the present invention will hereinafter be described in detail. However, these embodiments are only exemplary, and the present invention is not limited thereto. Their features can, if appropriate, be combined.

One exemplary embodiment of the present invention provides a negative active material represented by the following Chemical Formula 1.

[Chemical Formula 1] X-Ra-Rb

In Chemical Formula 1,
X is an active materialwhose functional group has been reacted with a silane coupling agent,
Ra is a residual group from a silane coupling agent, and
Rb is a polymer including a first repeating unit represented by the following Chemical Formula 2a.

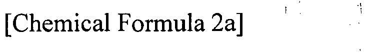

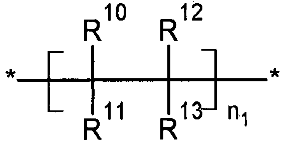

In Chemical Formula 2a,
R¹⁰ to R¹³ are the same or different, and are hydrogen; or a substituted or unsubstituted C1 to C5 alkyl group, and nl is an integer ranging from 1 to 100000, and * is a chemical bond. The substituted C1 to C5 alkyl group is a group in which at least one hydrogen is substituted with an amino group, an acryl group, a vinyl group, an epoxy group, or a phenyl group.

The residual group derived from a silane coupling agent, Ra may be represented by the following Chemical Formula 3.

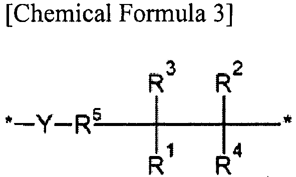

In Chemical Formula 3,
R¹, R² and R³ are the same or different, and are hydrogen; or a substituted or unsubstituted C1 to C5 alkyl group,
R⁴ is a carboxyl group, an amino group, an acryl group, a vinyl group, an epoxy group, or a phenyl group,
R⁵ is a substituted of unsubstituted C1 to C5 alkylene group, and
Y is a silane functional group and * is a chemical bond.

According to one embodiment of the present invention, the polymer of Formula 2a may be a copolymer further including a second repeating unit represented by the following Chemical Formula 2b together with the first repeating unit represented by the above Chemical Formula 2a.

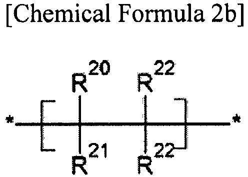

In Chemical Formula 2b,
R²⁰ to R²² are the same or different, and are hydrogen; or a substituted or unsubstituted C1 to C5 alkyl group and * is a chemical bond. The substituted C1 to C5 alkyl group is a group in which at least one hydrogen is substituted with an amino group, an acryl group, a vinyl group, an epoxy group, or a phenyl group.

When the polymer is a copolymer further including the second repeating unit, the first repeating unit and the second repeating unit may have a mole ratio of about 0.9 : 0.1 to about 0.1 : 0.9. When the first repeating unit and the second repeating unit have a mole ratio within this range, the binder may more actively form a network with the active material, so it may improve the cycle-life and well maintain the electrode adherence.

When the polymer is a copolymer further including a second repeating unit, the copolymer may have a weight average molecular weight (Mw) of about 5,000 to about 4,000,000.

In one embodiment of the present invention, the polymer including a first repeating unit represented by Chemical Formula 2a or the polymer including the first repeating unit and the second repeating unit represented by Chemical Formula 2b is obtained by polymerizing the monomer and the oligomer used for the negative electrode manufacturing process.

The monomer and the oligomer may be a monomer and an oligomer including at least one of an amino group, an acryl group, a vinyl group, an epoxy group, or a phenyl group.

The monomer may be selected form phenoxyethylacrylate, phenoxydiethyleneglycolacrylate, phenoxytetraethyleneglycolacrylate, phenoxyhexaethyleneglycolacrylate, isobornylacrylate, isobornylmetaacrylate, bisphenol ethoxylate diacrylate, ethoxylate phenol monoacrylate, polyethyleneglycol 200 diacrylate, tripropyleneglycol diacrylate, trimethylolpropane triacrylate, trimethylpropane triacrylate, triethylpropane triacrylate, polyethyleneglycol diacrylate, ethyleneoxide addition triethylpropanetriacrylate, pentaerythritol tetraacrylate, 1,4-butanediol diacrylate, 1,6-hexanediol diacrylate, ethoxylated pentaerythritol tetraacrylate, 2-phenoxyethyl acrylate, ethoxylated bisphenol A diacrylate, or mixtures thereof, but is not limited thereto.

Further, the oligomer may include a urethane acrylate oligomer, or an epoxy acrylate oligomer.

The active material comprises Si, SiOₓ (0 < x < 2), a Si-Q alloy (wherein Q is an element selected from the group consisting of an alkali metal, an alkaline-earth metal, a Group 13 element, a Group 14 element, a Group 15 element, a Group 16 element, a transition element, a rare earth element, and combinations thereof, but is not Si), Sn, SnO₂, a Sn-R alloy (wherein R is an element selected from the group consisting of an alkali metal, an alkaline-earth metal, a Group 13 element, a Group 14 element, a Group 15 element, a Group 16 element, a transition element, a rare earth element, and combinations thereof, but is not Sn), or combinations thereof. The element Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

A negative electrode according to the present invention includes a current collector and a negative active material layer including the negative active material. According to the invention, the negative active material layer is composed of only the negative active material represented by Chemical Formula 1.

The current collector may be selected from the group consisting of a copper foil, a nickel foil, a stainless steel foil, a titanium foil, a nickel foam, a copper foam, a polymer substrate coated with a conductive metal, and combinations thereof.

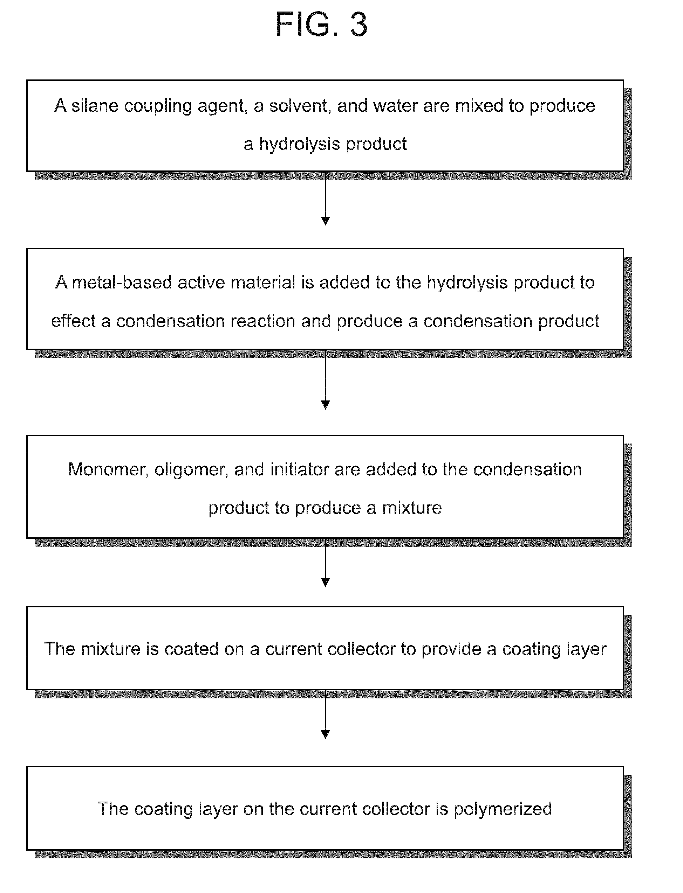

According to another embodiment of the present invention, a method of manufacturing a negative electrode for a rechargeable lithium battery is provided that includes mixing a silane coupling agent, a solvent, and water to provide a hydrolysis product; adding an active material to the hydrolysis product to effect a condensation reaction and to provide a condensation product; adding a vehicle including monomer, oligomer, and initiator to the condensation product to provide a mixture; coating the mixture on a current collector; and polymerizing the obtained current collector. The process is represented in Figure 3. Each step is described hereinafter in more detail.

First, a silane coupling agent, a solvent, and water are mixed to provide a hydrolysis product.

The silane coupling agent and the solvent may be mixed in a weight ratio of about 1 : 50 to 100.

The solvent may include any polar solvent. Non-limiting examples may include methanol, ethanol, isopropyl alcohol, isobutanol, t-butanol, benzylalcohol, or combinations thereof, but is not limited thereto.

Water, used for the hydrolysis reaction, hydrolyzes the silane coupling agent to provide a silane functional group having an OH group. The water is added in sufficient amount to hydrolyze the silane coupling agent, for example, it may be added in at least about 3 moles per one mole of silane coupling agent. Water is sufficient if it is added in 3 or more moles per one mole of silane coupling agent, so it is not limited to the maximum limited value.

The silane coupling agent may be a silane-based compound having a functional group selected from an amino group, acryl group, vinyl group, epoxy group, mercapto group, chloro group, phenyl group, or combinations thereof.

The silane coupling agent may include, but is not limited to, at least one selected from 3-methoxysilylpropyl methacrylate, 3-(trimethoxysilyl)propyl methacrylate, 3-ethoxysilylpropyl methacrylate, 3-methoxysilylpropyl acrylate, 3-ethoxysilylpropyl acrylate, 3-methoxysilylbutyl methacrylate, 3-ethoxysilylbutyl methacrylate, 3-methoxysilylbutyl acrylate, 3-ethoxysilylbutyl acrylate, 3-methoxysilylpentyl methacrylate, 3-ethoxysilylpentyl methacrylate, 3-methoxysilylpentyl acrylate, 3-ethoxysilylpentyl acrylate, 3-methoxysilylhexyl methacrylate, 3-ethoxysilylhexyl methacrylate, 3-methoxysilylhexyl acrylate, 3-ethoxysilylhexyl acrylate, 3-methoxysilylheptyl methacrylate, 3-ethoxysilylheptyl methacrylate, 3-methoxysilylheptyl acrylate, 3-ethoxysilylheptyl acrylate, 3-methoxysilyloctyl methacrylate, 3-ethoxysilyloctyl methacrylate, 3-methoxysilyloctyl acrylate, 3-ethoxysilyloctyl acrylate, 3-methoxysilylnonyl methacrylate, 3-ethoxysilylnonyl methacrylate, 3-methoxysilylnonyl acrylate, or 3-ethoxysilylnonyl acrylate, or combinations thereof.

Then an active material is added to the obtained hydrolysis product.

The active material may be added in about 3000 to 9000 parts by weight based on 100 parts by weight of the silane coupling agent. When the active material is added within this range, it may enhance the adherence through the appropriate bond of the active material with the silane coupling agent and improve the cycle-life characteristic.

The active material is bonded with the silane coupling agent through a condensation reaction The active material includes Si, SiOₓ (0 < x < 2), a Si-Q alloy (wherein Q is an element selected from the group consisting of an alkali metal, an alkaline-earth metal, a Group 13 element, a Group 14 element, a Group 15 element, a Group 16 element, a transition element, a rare earth element, and combinations thereof, but is not Si), Sn, SnO₂, a Sn-R alloy (wherein R is an element selected from the group consisting of an alkali metal, an alkaline-earth metal, a Group 13 element, a Group 14 element, a Group 15 element, a Group 16 element, a transition element, a rare earth element, and combinations thereof, but is not Sn), or combinations thereof. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

The active material is used in a state with OH groups on the surface formed by reacting with oxygen from the air. The OH groups on the surface causes a condensation reaction with the hydrolysis product of the silane coupling agent.

The condensation reaction is performed at a temperature equal to or below the boiling point of the solvent, for example, at room temperature to about 100°C. The condensation reaction may be performed for about 12 hours, but does not need to be specifically limited.

A vehicle is added to the obtained condensation product.

The vehicle is prepared by mixing monomer, oligomer, and initiator. The monomer may be mixed with the oligomer in a weight ratio of about 9 : 1 to about 1 : 9. When the monomer is mixed with the oligomer within the range, it may better maintain the flexibility of the electrode plate.

In addition, the initiator may be included in about 0.1 to 10 parts by weight based on 100 parts by weight of the monomer and oligomer.

The monomer and the oligomer may be a monomer and an oligomer including at least one of an amino group, an acryl group, a vinyl group, an epoxy group, or a phenyl group.

The monomer may be selected from phenoxyethylacrylate, phenoxydiethyleneglycolacrylate, phenoxytetraethyleneglycolacrylate, phenoxyhexaethyleneglycolacrylate, isobornylacrylate, isobornylmetaacrylate, bisphenol ethoxylate diacrylate, ethoxylate phenol monoacrylate, polyethyleneglycol 200 diacrylate, tripropyleneglycol diacrylate, trimethylolpropane triacrylate, trimethylpropane triacrylate, triethylpropane triacrylate, polyethyleneglycol diacrylate, ethyleneoxide addition triethylpropanetriacrylate, pentaerythritol tetraacrylate, 1,4-butanediol diacrylate, 1,6-hexanediol diacrylate, ethoxylated pentaerythritol tetraacrylate, 2-phenoxyethyl acrylate, ethoxylated bisphenol A diacrylate, or mixtures thereof, but is not limited thereto.

Further, the oligomer may include a urethane acrylate oligomer or an epoxy acrylate oligomer.

It may be further added with an additive for improving the physical property of a coating agent, and it may be added within a range that does not change the physical properties of a coating agent. Examples of the additive include a heat stabilizer, a compatibilizer, an inorganic material additive, a surfactant, a plasticizer, a defoamer, an admixture, a stabilizer, a lubricant, or combinations thereof.

A thermal curing initiator or a photo-curing initiator may be used as the initiator.

Examples of the thermal curing initiator include peroxides such as di-t-butyl peroxide, persulfates, azos, or silver alkyls.

Examples of the photo-curing initiator include 2-hydroxy-2-methyl-1-phenyl-1-propanone, 2,4-bistrichloromethyl-6-p-methoxystyryl-s-triazine, 2-p-methoxyphenyl-4,6-bistrichloromethyl-s-triazine, 4-trichloromethyl-6-triazine, 4-trichloromethyl-4-methylnaphthyl-6-triazine, benzophenone, p-(diethylamino)benzophenone, 2,2'-dichloro-4-phenoxyacetophenone, 2,2'-diethoxyacetophenone, 2,2'-dibutoxyacetophenone, 2-hydroxy-2-methylpropiophenone, p-t-butyltrichloroacetophenone, diphenyl 1 (2,4,6-trimethylbenzoyl) phosphine oxide, bis(2,4,6-trimethylbenzoyl) phenyl phosphine oxide, 2-methylthioxanthone, 2-isobutylthioxanthone, 2-dodecylthioxanthone, 2,4-dimethylthioxanthone, 2,4-diethylthioxanthone, 2,2'-bis(2-chlorophenyl)-4,5,4',5'-tetraphenyl-2'-1,2'-biimidazole compound, or combinations thereof.

The condensation product may be mixed with the vehicle in about 9 : 1 to about 3 : 1 weight ratio.

Then the mixture is coated on a current collector to provide a coating layer. The coating process may be performed according to any general coating process.

The current collector coated with the coating layer is polymerized. The polymerization reaction may be performed according to a photo-curing or a thermal curing process. When the polymerization reaction is performed according to a photo-curing process, the current collector coated with the coating layer may be irradiated with a light source. The light source may include UV, electron beam or X-ray, for example, it may include UV having a wavelength range of about 200 nm to about 400 nm. It may be irradiated for several minutes to several tens of minutes, but is not limited thereto.

When the polymerization reaction is performed according to a thermal curing process, the current collector coated with the coating layer is maintained at about 100°C to about 200°C for about 0.1 hour to about 2 hours.

According to the process, the negative active material layer including the negative active material represented by above Chemical Formula 1 is formed on the current collector. In addition, if using one kind of monomer, the current collector may be formed with the negative active material layer including a polymer including only the first repeating unit represented by Chemical Formula 2a; on the other hand, if using two or more kinds of monomers, the current collector may be formed with the negative active material layer including a polymer including not only a first repeating unit represented by above Chemical Formula 2a but also a second repeating unit represented by Chemical Formula 2b.

After the polymerization reaction, it is heated at about 80°C to about 140°C for about 2 hours to 4 hours to further remove moisture from the electrode plate. The heat treatment may be performed under vacuum.

Another embodiment of this disclosure provides a rechargeable lithium battery.

Rechargeable lithium batteries may be classified into lithium ion batteries, lithium ion polymer batteries, and lithium polymer batteries according to the presence of a separator and the kind of electrolyte used in the battery. The rechargeable lithium batteries may have a variety of shapes and sizes, and include cylindrical, prismatic, or coin-type batteries, and may be thin film batteries or may be rather bulky in size. Structures and fabrication methods for lithium ion batteries are well known in the art.

A rechargeable lithium battery includes a negative electrode as defined above, a positive electrode including a positive active material, and a non-aqueous electrolyte.

The positive electrode includes a current collector and a positive active material layer disposed on the current collector. The positive active material includes a lithiated intercalation compound that reversibly intercalates and deintercalates lithium ions. The positive active material may include a composite oxide including at least one selected from the group consisting of cobalt, manganese, and nickel, as well as lithium. Examples of the positive active material may include a compound represented by the following Chemical Formulae : LiₐA_{1-b}X_{b}D₂ (0.90 ≤ a ≤ 1.8, 0 ≤ b ≤ 0.5); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤1.8, 0 ≤ b ≤ 0.5, 0 ≤ c ≤ 0.05, 0 ≤ α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 ≤ α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 ≤ α < 2); LiₐNi_{1-b-c}Mn_{b}X_{c}D_{α} (0.90 ≤ a ≤ 1.8, 0 ≤ b ≤ 0.5, 0 ≤ c ≤ 0.05, 0 ≤ α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 ≤ α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 ≤ α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (0.90 ≤ a ≤ 1.8, 0.001 ≤b≤ 0.1); LiₐCoG_{b}O₂ (0.90 ≤ a ≤ 1.8, 0.001 ≤ b ≤ 0.1); LiₐMnG_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); QO₂; QS₂; LiQS₂; V₂O₅; LiV₂O₅; LiZO₂; LiNiVO₄; Li_{(3-f)}J₂(PO₄)₃ (0 ≤ f ≤ 2); Li_{(3-f)}Fe₂(PO₄)₃ (0 ≤ f ≤ 2); LiFePO₄.

In the above formulae, A is selected from the group consisting ofNi, Co, Mn, and combinations thereof; X is selected from the group consisting of Al, Ni, Co, Mn, Cr, Fe, Mg, Sr, V, a rare earth element, and combinations thereof; D is selected from the group consisting of O, F, S, P, and combinations thereof; E is selected from the group consisting of Co, Mn, and combinations thereof; T is selected from the group consisting of F, S, P, and combinations thereof; G is selected from the group consisting of Al, Cr, Mn, Fe, Mg, La, Ce, Sr, V, and combinations thereof; Q is selected from the group consisting of Ti, Mo, Mn, and combinations thereof; Z is selected from the group consisting of Cr, V, Fe, Sc, Y, and combinations thereof; and J is selected from the group consisting of V, Cr, Mn, Co, Ni, Cu, and combinations thereof.

The compound may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixtures thereof. The coating layer may be disposed with a method having no adverse influence on properties of a positive active material. For example, the method may include any coating method such as spray coating, dipping, and the like, but is not illustrated in more detail since it is well-known to those of ordinary skill in the art.

The positive active material may be included in an amount ranging from about 90 wt% to about 98 wt% based on the total weight of the positive active material layer.

The positive active material layer may also include a binder and a conductive material. The binder and conductive material may be included in amounts of about 1 wt% to about 5 wt% based on the total weight of the positive active material layer, respectively.

The binder improves properties of binding positive active material particles among one another and also, the positive active material with a current collector. Examples of the binder include polyvinyl alcohol, carboxylmethyl cellulose, hydroxypropyl cellulose, diacetyl cellulose, polyvinyl chloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to impart conductivity to an electrode. It may include any electrically conductive material, unless it causes a chemical change. Examples of the conductive material include a carbon-based material such as natural graphite, artificial graphite, carbon black, acetylene black, ketjen black, a carbon fiber, and the like; a metal-based material such as a metal powder, a metal fiber, or the like that includes copper, nickel, aluminum, silver, and the like; a conductive polymer such as a polyphenylene derivative; or mixtures thereof.

The current collector may be aluminum (Al) but is not limited thereto.

The positive electrode may be obtained in a general process including mixing a positive active material, a binder, and selectively a conductive material in a solvent to prepare an active material composition, coating the active material composition on a current collector, and drying and pressing the same. Electrode-manufacturing methods are well known and thus are not described in detail in the present specification. The solvent includes N-methylpyrrolidone or the like, but is not limited thereto.

The non-aqueous electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone and the like. Examples of the alcohol-based solvent include ethyl alcohol, isopropyl alcohol, and the like, and examples of the aprotic solvent include nitriles such as R-CN (where R is a C2 to C20 linear, branched, or cyclic hydrocarbon, or comprises a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio may be controlled in accordance with a desirable battery performance.

The carbonate-based solvent may be prepared by mixing a cyclic carbonate and a linear carbonate. The cyclic carbonate and the linear carbonate are mixed together in a volume ratio ranging from about 1:1 to about 1:9. When the mixture is used as an electrolyte, the electrolyte performance is enhanced.

In addition, the non-aqueous organic electrolyte may be further prepared by mixing a carbonate-based solvent with an aromatic hydrocarbon-based solvent. The carbonate-based and the aromatic hydrocarbon-based solvents may be mixed together in a volume ratio ranging from about 1:1 to about 30:1.

The aromatic hydrocarbon-based organic solvent may be represented by the following Chemical Formula 4.

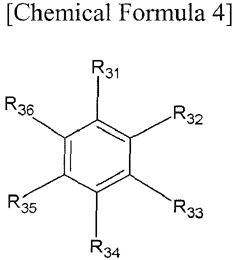

In Chemical Formula 4,
R₃₁ to R₃₆ are independently selected from the group consisting of hydrogen, a halogen, a C1 to C10 alkyl group, a C1 to C10 haloalkyl group, and combinations thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The non-aqueous electrolyte may further include an additive of vinylene carbonate, an ethylene carbonate-based compound represented by the following Chemical Formula 5, or combinations thereof to improve cycle life.

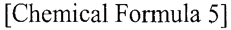

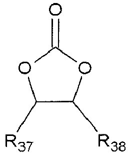

In Chemical Formula 5,
R₃₇ and R₃₈ are independently selected from the group consisting of hydrogen, a halogen, a cyano group (CN), a nitro group (NO₂) and a C1 to C5 fluoroalkyl group, provided that at least one of R₃₇ and R₃₈ is selected from the group consisting of a halogen, a cyano group (CN), a nitro group (NO₂) and a C1 to C5 fluoroalkyl group, but both R₃₇ and R₃₈ are not hydrogen.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the additive used to improve cycle life may be adjusted within an appropriate range.

The lithium salt is dissolved in an organic solvent and plays a role of supplying lithium ions in a battery, operating a basic operation of the rechargeable lithium battery, and improving lithium ion transportation between positive and negative electrodes therein. Non-limiting examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (x and y are natural numbers), LiCl, LiI, and LiB(C₂O₄)₂ (lithium bis(oxalato) borate; LiBOB). The lithium salt may be used in a concentration ranging from about 0.1 M to about 2.0 M. When the lithium salt is included at the above concentration range, an electrolyte has excellent performance and lithium ion mobility due to optimal electrolyte conductivity and viscosity.

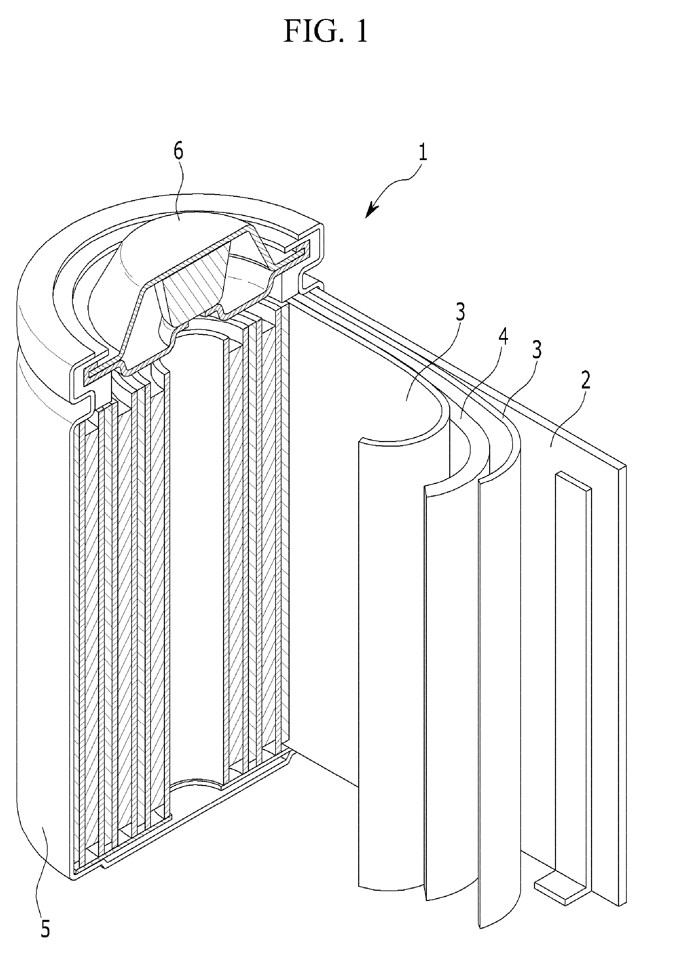

FIG. 1 is a schematic view showing a representative structure of a rechargeable lithium battery 1 according to one embodiment. As shown in FIG. 1, the rechargeable lithium battery 1 includes a battery case 5 including a positive electrode 3, a negative electrode 2, and a separator 4 interposed between the positive electrode 3 and the negative electrode 2, an electrolyte solution impregnated therein, and a sealing member 6 sealing the battery case 5.

The rechargeable lithium battery may further include a separator between the negative electrode and the positive electrode, as needed. Non-limiting examples of suitable separator materials include polyethylene, polypropylene, polyvinylidene fluoride, and multilayers thereof such as a polyethylene/polypropylene double-layered separator, a polyethylene/polypropylene/polyethylene triple-layered separator, and a polypropylene/polyethylene/polypropylene triple-layered separator.

The following examples illustrate the present invention in more detail. These examples, however, are not in any sense to be interpreted as limiting the scope of this disclosure.

### Example 1

3-(trimethoxysilyl)propyl methacrylate silane coupling agent represented by the following Chemical Formula 6 is mixed with isopropyl alcohol and water. The silane coupling agent and isopropyl alcohol are mixed in a weight ratio of about 1 : 100, and the silane coupling agent and water have a mole ratio of about 1 : 4.

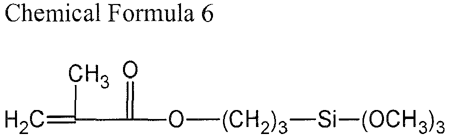

According to the process, the silane coupling agent is hydrolyzed according to the following Reaction scheme 1.

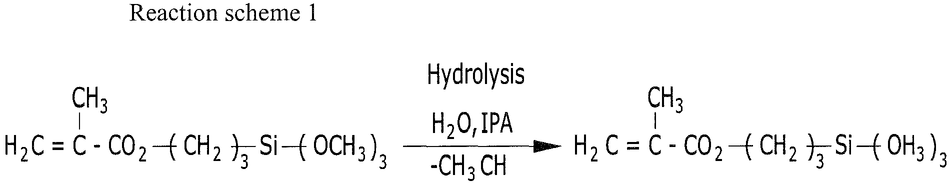

SiOₓ (x=0.3) active material is added into the hydrolysis product and maintained at about 60□ for about 6 hours. The active material is added in about 9000 parts by weight based on 100 parts by weight of the silane coupling agent. Accordingly, it obtains the condensation product by the condensation reaction as shown in the following Reaction scheme 2. In other words, "-OH groups" present on the surface of SiOₓ (x=0.3) active material and "H groups" of silane are condensed to remove water and form a bond.

In Reaction scheme 2, the binding product of active material-silane is represented as a part, 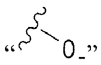 part indicates that the terminal group is not a methyl group but refers to the active material or the like which may be bonded to oxygen.

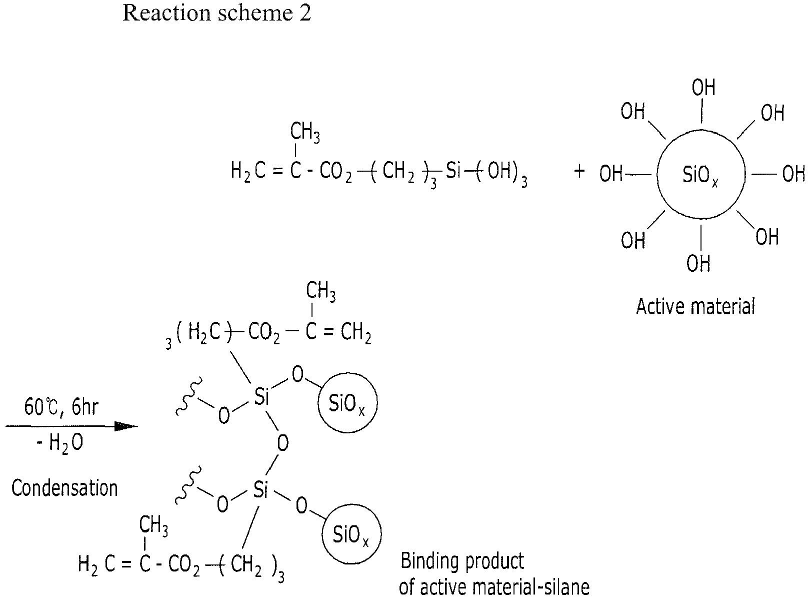

The trimethylolpropane triacrylate monomer represented by the following Chemical Formula 7, the urethane acrylate oligomer, and di-t-butyl peroxide initiator are mixed to provide a vehicle.

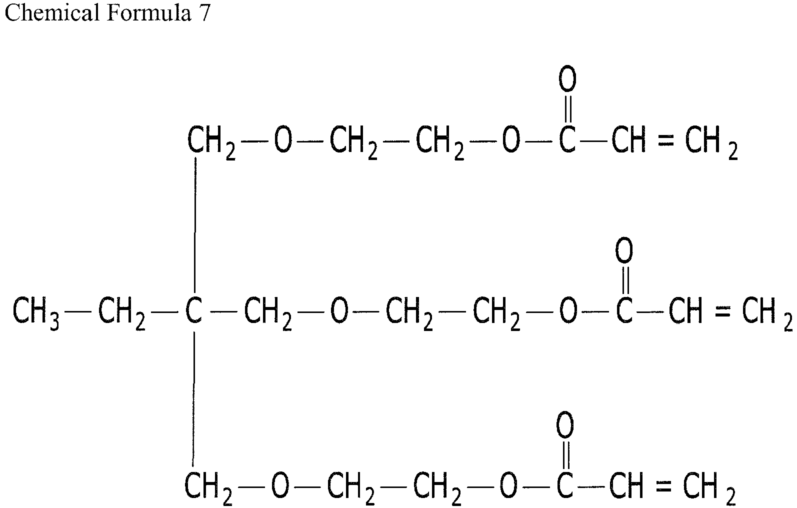

Then, the obtained condensation product and the vehicle are mixed in a ratio of about 9 : 1 wt%.

In the mixture, the silane coupling agent, the isopropyl alcohol, the monomer, the oligomer, and the active material are included as shown in the following Table 1. In addition, the initiator may be included in about 3 parts by weight based on the total 100 parts by weight of monomer and oligomer.

The mixture is coated on an Al current collector to provide a coating layer.

The Al current collector formed with the coating layer is thermally cured at about 200°C for about 1 hour. It is polymerized according to the thermal curing process to react silane coupling agent bonded with the active material, with the monomer and the oligomer, and the monomer and the oligomer are cross-linked with each other to provide a polymer. Then the heated Al current collector is heated at about 80°C for about three hours under the vacuum to remove moisture of electrode plate.

As a result, it provides a negative electrode including Al current collector formed with the negative active material layer including negative active material that the polymer prepared by polymerizing the monomer and the oligomer is bonded with SiOₓ (x=0.3) active material through the silane coupling agent.

### Example 2

A negative electrode is prepared by the same procedure as in Example 1, except the silane coupling agent, isopropyl alcohol, monomer, oligomer, and active material are included as shown in the following Table 1 in the mixture of the condensation product and the vehicle. The initiator is added in as much as about 3 parts by weight based on the total 100 parts by weight of monomer and oligomer.

### Example 3

A negative electrode is prepared by the same procedure as in Example 1, except the silane coupling agent, isopropyl alcohol, monomer, oligomer, and active material are included as shown in the following Table 1 in the mixture of the condensation product and the vehicle. In addition, the initiator is added in as much as about 3 parts by weight based on the total 100 parts by weight of monomer and oligomer.

### Comparative Example 1

A negative electrode is prepared by the same procedure as in Example 1, except silane coupling agent, isopropyl alcohol, monomer, oligomer, and active material are included as shown in the following Table 1 in the mixture of the condensation product and the vehicle. In addition, the initiator is added in as much as about 3 parts by weight based on the total 100 parts by weight of monomer and oligomer.

**Table 1**

| | Monomer (wt%) | Oligomer (wt%) | Silane coupling agent (wt%) | Active material (wt%) | Isopropyl alcohol (wt%) |
|---|---|---|---|---|---|
| Comparative Example 1 | 1.50 | 3.50 | 0.00 | 45.00 | 50.00 |
| Example 1 | 1.35 | 3.15 | 0.50 | 45.00 | 50.00 |
| Example 2 | 1.20 | 2.80 | 1.00 | 45.00 | 50.00 |
| Example 3 | 1.05 | 2.45 | 1.50 | 45.00 | 50.00 |

Using each negative electrode obtained by Examples 1 to 3 and Comparative Example 1, a counter electrode of lithium metal, and an electrolyte solution that 1M of LiPF₆ is dissolved in a mixed solvent (5:55:40 volume ratio) of ethylene carbonate/diethyl carbonate, fluoroethylene carbonate, a coin-type half-cell is manufactured.

The half-cell is charged and discharged for 50 cycles under the conditions of constant current /constant voltage charge at 0.5C and constant current discharge at 0.5C to measure the discharge capacity.

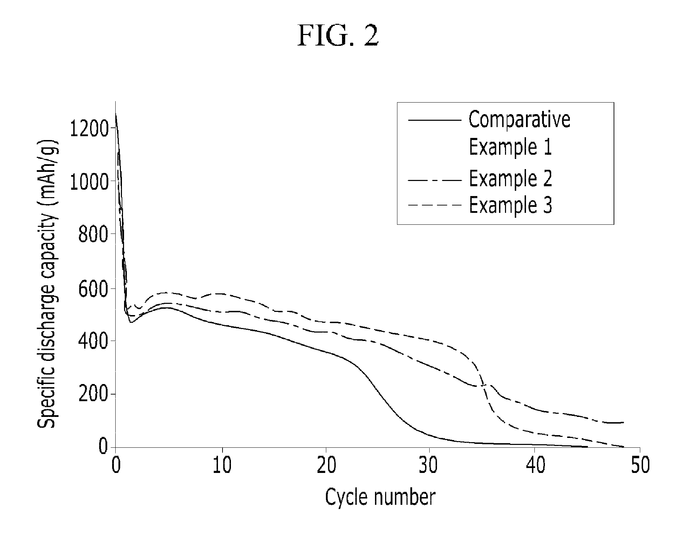

FIG. 2 shows the discharge capacity retention (cycle-life characteristic) of Examples 2 and 3 and Comparative Example 1. As shown in FIG. 2, it is understood that the capacity retentions of Examples 2 to 3 are superior to that of Comparative Example 1.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A negative electrode for a rechargeable lithium battery comprising
a current collector; and
a negative active material layer formed on the current collector;
**characterized in that** the negative active material layer consists of a negative active material, represented by the following Chemical Formula 1:
Chemical Formula 1 X-Ra-Rb
wherein,
X is an active material which comprises
Si,
SiOₓ (0 < x < 2),
a Si-Q alloy, wherein Q is an element selected from the group consisting of an alkali metal, an alkaline-earth metal, a Group 13 element, a Group 14 element, a Group 15 element, a Group 16 element, a transition element, a rare earth element, and combinations thereof, but is not Si,
Sn,
SnO₂,
a Sn-R alloy wherein R is an element selected from the group consisting of an alkali metal, an alkaline-earth metal, a Group 13 element, a Group 14 element, a Group 15 element, a Group 16 element, a transition element, a rare earth element, and combinations thereof, but is not Sn,
or combinations thereof,
and whose functional group has been reacted with a silane coupling agent;
Ra is a residual group from a silane coupling agent; and
Rb is a polymer including a first repeating unit represented by the following Chemical Formula 2a, 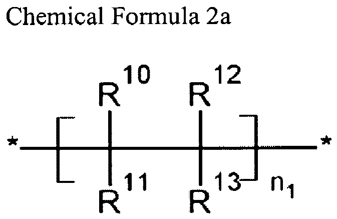 wherein,
R¹⁰ to R¹³ are the same or different, and are hydrogen; or a substituted or unsubstituted C1 to C5 alkyl group, n1 is an integer ranging from 1 to 100000, and * is a chemical bond.

2. The negative active electrode of claim 1, wherein the substituted C1 to C5 alkyl group is a group in which at least one hydrogen is substituted with an amino group, an acryl group, a vinyl group, an epoxy group, or a phenyl group.

3. The negative electrode of claim 1 or 2, wherein the residual group from a silane coupling agent, Ra is represented by the following Chemical Formula 3: 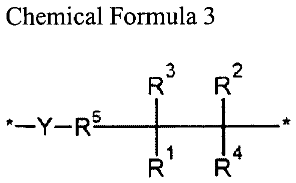 wherein,
R¹, R² and R³ are the same or different, and are hydrogen; or a substituted or unsubstituted C1 to C5 alkyl group,
R⁴is a carboxyl group, an amino group, an acryl group, a vinyl group, an epoxy group, or a phenyl group,
R⁵ is a substituted or unsubstituted C1 to C5 alkylene group,
Y is a silane functional group, and
* is a chemical bond.

4. The negative electrode of claim 1, 2 or 3 wherein the polymer Rb further comprises a second repeating unit of the following Chemical Formula 2b: 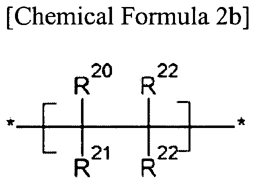 wherein,
R²⁰ to R²² are the same or different, and are hydrogen or a substituted or unsubstituted C1 to C5 alkyl group, and
* is a chemical bond.

5. The negative electrode of claim 4, wherein the substituted C1 to C5 alkyl group is a group in which at least one hydrogen is substituted with an amino group, an acryl group, a vinyl group, an epoxy group or a phenyl group.

6. The negative electrode of claim 4 or 5, wherein the mole ratio of the first repeating unit to the second repeating unit is about 0.9 : 0.1 to 0.1 : 0.9.

7. A method of making a negative electrode for a rechargeable lithium battery, comprising:
mixing a silane coupling agent, a solvent, and water to produce a hydrolysis product;
adding an active material to the hydrolysis product to effect a condensation reaction and to produce a condensation product;
adding a monomer, an oligomer, and an initiator to the condensation product to produce a mixture;
coating the mixture on a current collector; and
polymerizing the mixture on the current collector;
wherein the active material comprises:
Si,
SiOₓ (0 < x < 2),
a Si-Q alloy wherein Q is an element selected from the group consisting of an alkali metal, an alkaline-earth metal, a Group 13 element, a Group 14 element, a Group 15 element, a Group 16 element, a transition element, a rare earth element, and combinations thereof, but is not Si,
Sn,
SnO₂,
Sn-R wherein R is an element selected from the group consisting of an alkali metal, an alkaline-earth metal, a Group 13 element, a Group 14 element, a Group 15 element, a Group 16 element, a transition element, a rare earth element, and combinations thereof, but is not Sn,
or combinations thereof.

8. The method of making a negative electrode for a rechargeable lithium battery of claim 7, wherein the silane coupling agent comprises 3-methoxysilylpropyl methacrylate, 3-(trimethoxysilyl)propyl methacrylate, 3-ethoxysilylpropyl methacrylate, 3-methoxysilylpropyl acrylate, 3-ethoxysilylpropyl acrylate, 3-methoxysilylbutyl methacrylate, 3-ethoxysilylbutyl methacrylate, 3-methoxysilylbutyl acrylate, 3-ethoxysilylbutyl acrylate, 3-methoxysilylpentyl methacrylate, 3-ethoxysilylpentyl methacrylate, 3-methoxysilylpentyl acrylate, 3-ethoxysilylpentyl acrylate, 3-methoxysilylhexyl methacrylate, 3-ethoxysilylhexyl methacrylate, 3-methoxysilylhexyl acrylate, 3-ethoxysilylhexyl acrylate, 3-methoxysilylheptyl methacrylate, 3-ethoxysilylheptyl methacrylate, 3-methoxysilylheptyl acrylate, 3-ethoxysilylheptyl acrylate, 3-methoxysilyloctyl methacrylate, 3-ethoxysilyloctyl methacrylate, 3-methoxysilyloctyl acrylate, 3-ethoxysilyloctyl acrylate, 3-methoxysilylnonyl methacrylate, 3-ethoxysilylnonyl methacrylate, 3-methoxysilylnonyl acrylate, or 3-ethoxysilylnonyl acrylate, or combinations thereof.

9. The method of making a negative electrode for a rechargeable lithium battery of claim 7 or 8, wherein the monomer and the oligomer each comprise at least one of an amino group, an acryl group, a vinyl group, an epoxy group, or a phenyl group.

10. The method of making a negative electrode for a rechargeable lithium battery of anyone of claims 7 to 9, wherein the active material is included at about 3000 to about 9000 parts by weight based on 100 parts by weight of the silane coupling agent.

11. The method of making a negative electrode for a rechargeable lithium battery of anyone of claims 7 to 10, wherein the monomer and the oligomer are added in a weight ratio of about 1 : 9 to about 9 : 1.

12. The method of making a negative electrode for a rechargeable lithium battery of anyone of claims 7 to 11, wherein the polymerization reaction is performed according to photo-curing or thermal curing process.

13. A rechargeable lithium battery comprising:
a negative electrode as defined in anyone of claims 1 to 6;
a positive electrode comprising a positive active material; and
a non-aqueous electrolyte.

## Patentansprüche

1. Negative Elektrode für eine wiederaufladbare Lithiumbatterie, umfassend einen Stromkollektor; und
eine Schicht des Negativ-Aktivmaterials, gebildet auf dem Stromkollektor;
**dadurch gekennzeichnet, dass** die Schicht des Negativ-Aktivmaterials aus einem Negativ-Aktivmaterial der folgenden chemischen Formel 1 besteht:
Chemische Formel 1 X-Ra-Rb
wobei
X ein Aktivmaterial ist, das umfasst
Si,
SiOₓ (0 < x < 2),
eine Si-Q-Legierung, wobei Q ein Element ist, ausgewählt aus der Gruppe bestehend aus einem Alkalimetall, einem Erdalkalimetall, einem Element der Gruppe 13, einem Element der Gruppe 14, einem Element der Gruppe 15, einem Element der Gruppe 16,
einem Übergangsmetall, einem Seltenerdmetall und Kombinationen davon, aber nicht Si ist,
Sn,
SnO₂,
eine Sn-R-Legierung, wobei R ein Element ist, ausgewählt aus der Gruppe bestehend aus einem Alkalimetall, einem Erdalkalimetall, einem Element der Gruppe 13, einem Element der Gruppe 14, einem Element der Gruppe 15, einem Element der Gruppe 16,
einem Übergangsmetall, einem Seltenerdmetall und Kombinationen davon, aber nicht Sn ist,
oder Kombinationen davon,
und dessen funktionelle Gruppe mit einem Silan-Kupplungsmittel umgesetzt wurde;
wobei Ra ein zurückbleibender Rest von einem Silan-Kupplungsmittel ist; und
Rb ein Polymer ist, umfassend eine erste Wiederholungseinheit der folgenden chemischen Formel 2a: 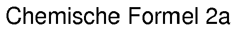 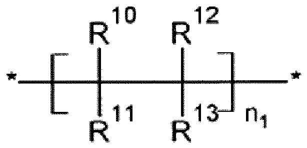 wobei
R¹⁰ bis R¹³ gleich oder verschieden sind und ein Wasserstoffatom oder ein substituierter oder unsubstituierter C₁- bis C₅-Alkylrest sind, n₁ eine ganze Zahl von 1 bis 100 000 ist und * für eine chemische Bindung steht.

2. Negative aktive Elektrode nach Anspruch 1, wobei der substituierte C₁- bis C₅-Alkylrest ein Rest ist, in dem mindestens ein Wasserstoffatom durch eine Aminogruppe, eine Acrylgruppe, eine Vinylgruppe, eine Epoxygruppe oder eine Phenylgruppe substituiert ist.

3. Negative Elektrode nach Anspruch 1 oder 2, wobei der zurückbleibende Rest von einem Silan-Kupplungsmittel, Ra, durch die folgende chemische Formel 3 wiedergegeben wird: 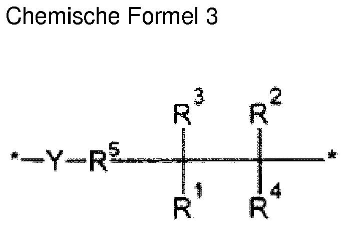 wobei
R¹, R² und R³ gleich oder verschieden sind und ein Wasserstoffatom oder ein substituierter oder unsubstituierter C₁- bis C₅-Alkylrest sind,
R⁴ eine Carboxylgruppe, eine Aminogruppe, eine Acrylgruppe, eine Vinylgruppe, eine Epoxygruppe oder eine Phenylgruppe ist,
R⁵ ein substituierter oder unsubstituierter C₁- bis C₅-Alkylenrest ist,
Y eine funktionelle Silangruppe ist und
* für eine chemische Bindung steht.

4. Negative Elektrode nach Anspruch 1, 2 oder 3, wobei das Polymer Rb weiterhin eine zweite Wiederholungseinheit der folgenden chemischen Formel 2b umfasst: 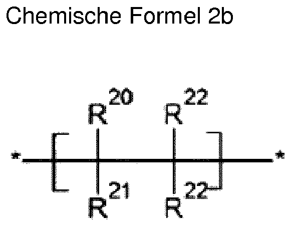 wobei
R²⁰ bis R²² gleich oder verschieden sind und ein Wasserstoffatom oder ein substituierter oder unsubstituierter C₁- bis C₅-Alkylrest sind, und
* für eine chemische Bindung steht.

5. Negative Elektrode nach Anspruch 4, wobei der substituierte C₁- bis C₅-Alkylrest ein Rest ist, in dem mindestens ein Wasserstoffatom durch eine Aminogruppe, eine Acrylgruppe, eine Vinylgruppe, eine Epoxygruppe oder eine Phenylgruppe substituiert ist.

6. Negative Elektrode nach Anspruch 4 oder 5, wobei das Molverhältnis der ersten Wiederholungseinheit zur zweiten Wiederholungseinheit etwa 0,9:0,1 bis 0,1:0,9 beträgt.

7. Verfahren zur Herstellung einer negativen Elektrode für eine wiederaufladbare Lithiumbatterie, umfassend:
Mischen eines Silan-Kupplungsmittels, eines Lösungsmittels und von Wasser, um ein Hydrolyseprodukt zu erzeugen;
Hinzugeben eines Aktivmaterials zum Hydrolyseprodukt, um eine Kondensationsreaktion zu bewirken und ein Kondensationsprodukt zu erzeugen;
Hinzugeben eines Monomers, eines Oligomers und eines Initiators zum Kondensationsprodukt, um ein Gemisch herzustellen;
Aufbringen des Gemisches auf einem Stromkollektor; und
Polymerisieren des Gemisches auf dem Stromkollektor;
wobei das Aktivmaterial umfasst:
Si,
SiOₓ (0 < x < 2),
eine Si-Q-Legierung, wobei Q ein Element ist, ausgewählt aus der Gruppe bestehend aus einem Alkalimetall, einem Erdalkalimetall, einem Element der Gruppe 13, einem Element der Gruppe 14, einem Element der Gruppe 15, einem Element der Gruppe 16,
einem Übergangsmetall, einem Seltenerdmetall und Kombinationen davon, aber nicht Si ist,
Sn,
SnO₂,
Sn-R, wobei R ein Element ist, ausgewählt aus der Gruppe bestehend aus einem Alkalimetall, einem Erdalkalimetall, einem Element der Gruppe 13, einem Element der Gruppe 14, einem Element der Gruppe 15, einem Element der Gruppe 16, einem Übergangsmetall, einem Seltenerdmetall und Kombinationen davon, aber nicht Sn ist,
oder Kombinationen davon.

8. Verfahren zur Herstellung einer negativen Elektrode für eine wiederaufladbare Lithiumbatterie nach Anspruch 7, wobei das Silan-Kupplungsmittel 3-Methoxysilylpropylmethacrylat, 3-(Trimethoxysilyl)propylmethacrylat, 3-Ethoxysilylpropylmethacrylat, 3-Methoxysilylpropylacrylat, 3-Ethoxysilylpropylacrylat, 3-Methoxysilylbutylmethacrylat, 3-Ethoxysilylbutylmethacrylat, 3-Methoxysilylbutylacrylat, 3-Ethoxysilylbutylacrylat, 3-Methoxysilylpentylmethacrylat, 3-Ethoxysilylpentylmethacrylat, 3-Methoxysilylpentylacrylat, 3-Ethoxysilylpentylacrylat, 3-Methoxysilylhexylmethacrylat, 3-Ethoxysilylhexylmethacrylat, 3-Methoxysilylhexylacrylat, 3-Ethoxysilylhexylacrylat, 3-Methoxysilylheptylmethacrylat, 3-Ethoxysilylheptylmethacrylat, 3-Methoxysilylheptylacrylat, 3-Ethoxysilylheptylacrylat, 3-Methoxysilyloctylmethacrylat, 3-Ethoxysilyloctylmethacrylat, 3-Methoxysilyloctylacrylat, 3-Ethoxysilyloctylacrylat, 3-Methoxysilylnonylmethacrylat, 3-Ethoxysilylnonylmethacrylat, 3-Methoxysilylnonylacrylat oder 3-Ethoxysilylnonylacrylat, oder Kombinationen davon umfasst.

9. Verfahren zur Herstellung einer negativen Elektrode für eine wiederaufladbare Lithiumbatterie nach Anspruch 7 oder 8, wobei das Monomer und das Oligomer jeweils mindestens eine Aminogruppe, eine Acrylgruppe, eine Vinylgruppe, eine Epoxygruppe oder eine Phenylgruppe umfassen.

10. Verfahren zur Herstellung einer negativen Elektrode für eine wiederaufladbare Lithiumbatterie nach einem der Ansprüche 7 bis 9, wobei das Aktivmaterial zu etwa 3 000 bis etwa 9 000 Gewichtsteilen, bezogen auf 100 Gewichtsteile des Silan-Kupplungsmittels, enthalten ist.

11. Verfahren zur Herstellung einer negativen Elektrode für eine wiederaufladbare Lithiumbatterie nach einem der Ansprüche 7 bis 10, wobei das Monomer und das Oligomer in einem Gewichtsverhältnis von etwa 1:9 bis etwa 9:1 hinzugegeben werden.

12. Verfahren zur Herstellung einer negativen Elektrode für eine wiederaufladbare Lithiumbatterie nach einem der Ansprüche 7 bis 11, wobei die Polymerisationsreaktion gemäß einem Verfahren der Photohärtung oder der thermischen Härtung durchgeführt wird.

13. Wiederaufladbare Lithiumbatterie, umfassend:
eine negative Elektrode, wie definiert in einem der Ansprüche 1 bis 6;
eine positive Elektrode, umfassend ein Positiv-Aktivmaterial; und
einen nichtwässrigen Elektrolyten.

## Revendications

1. Electrode négative pour une batterie au lithium rechargeable, comprenant :
un collecteur de courant ; et
une couche de matière active négative formée sur le collecteur de courant ;
**caractérisée en ce que** la couche de matière active négative consiste en une matière active négative, représentée par la formule chimique 1 suivante :
Formule chimique 1 X-Ra-Rb
dans laquelle,
X représente une matière active qui comprend :
Si,
SiOₓ(0<x<2),
un alliage Si-Q, dans lequel Q représente un élément choisi dans le groupe consistant en un métal alcalin, un métal alcalino-terreux, un élément du Groupe 13, un élément du Groupe 14, un élément du Groupe 15, un élément du Groupe 16, un élément de transition, un élément faisant partie des terres rares et leurs associations, mais ne représente pas Si,
Sn,
SnO₂,
un alliage Sn-R dans lequel R représente un élément choisi dans le groupe consistant en un métal alcalin, un métal alcalino-terreux, un élément du Groupe 13, un élément du Groupe 14, un élément du Groupe 15, un élément du Groupe 16, un élément de transition, un élément faisant partie des terres rares et leurs associations, mais ne représente pas Sn,
ou leurs associations,
et dont le groupe fonctionnel est amené à réagir avec un agent de couplage du type silane ;
Ra représente un groupe résiduel d'un agent de couplage du type silane ; et
Rb représente un polymère comprenant un premier motif répété représenté par la formule chimique 2a suivante, 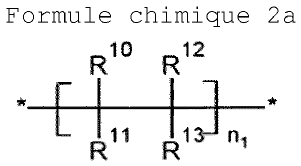 dans laquelle
R¹⁰ à R¹³ sont identiques ou différents et représentent un atome d'hydrogène ; ou un groupe alkyle en C₁ à C₅ substitué ou non substitué, n1 représente un nombre entier allant de 1 à 100 000, et * représente une liaison chimique.

2. Electrode active négative suivant la revendication 1, dans laquelle le groupe alkyle en C₁ à C₅ substitué est un groupe dans lequel au moins un atome d'hydrogène est substitué avec un groupe amino, un groupe acryle, un groupe vinyle, un groupe époxy ou un groupe phényle.

3. Electrode active négative suivant la revendication 1 ou 2, dans laquelle le groupe résiduel d'un agent de couplage du type silane, Ra, est représenté par la formule chimique 3 suivante : 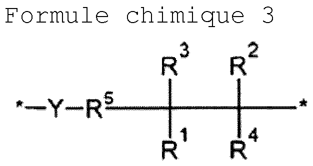 dans laquelle
R¹, R² et R³ sont identiques ou différents et représentent un atome d'hydrogène ; ou un groupe alkyle en C₁ à C₅ substitué ou non substitué ;
R⁴ représente un groupe carboxyle, un groupe amino, un groupe acryle, un groupe vinyle, un groupe époxy ou un groupe phényle,
R⁵ représente un groupe alkylène en C₁ à C₅ substitué ou non substitué,
Y représente un groupe fonctionnel silane, et
* représente une liaison chimique.

4. Electrode négative suivant la revendication 1, 2 ou 3, dans laquelle le polymère Rb comprend en outre un second motif répété de formule chimique 2b suivante : 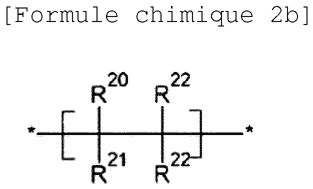 dans laquelle
R²⁰ à R²² sont identiques ou différents et représentent un atome d'hydrogène ou un groupe alkyle en C₁ à C₅ substitué ou non substitué, et
* représente une liaison chimique.

5. Electrode négative suivant la revendication 4, dans laquelle le groupe alkyle en C₁ à C₅ substitué est un groupe dans lequel au moins un atome d'hydrogène est substitué avec un groupe amino, un groupe acryle, un groupe vinyle, un groupe époxy, ou un groupe phényle.

6. Electrode négative suivant la revendication 4 ou 5, dans laquelle le rapport molaire du premier motif répété au second motif répété va d'environ 0,9:0,1 à 0,1:0,9.

7. Procédé pour la préparation d'une électrode négative pour une batterie au lithium rechargeable, comprenant :
le mélange d'un agent de couplage du type silane, d'un solvant et d'eau pour former un produit d'hydrolyse ;
l'addition d'une matière active au produit d'hydrolyse pour effectuer une réaction de condensation et pour former un produit de condensation ;
l'addition d'un monomère, d'un oligomère et d'un initiateur au produit de condensation pour produire un mélange ;
l'application du mélange sous forme d'un revêtement sur un collecteur de courant ; et
la polymérisation du mélange sur le collecteur de courant ;
dans lequel la matière active comprend :
Si,
SiOₓ(0<x<2),
un alliage Si-Q, dans lequel Q représente un élément choisi dans le groupe consistant en un métal alcalin, un métal alcalino-terreux, un élément du Groupe 13, un élément du Groupe 14, un élément du Groupe 15, un élément du Groupe 16, un élément de transition, un élément faisant partie des terres rares et leurs associations, mais ne représente pas Si,
Sn,
SnO₂,
un alliage Sn-R dans lequel R représente un élément choisi dans le groupe consistant en un métal alcalin, un métal alcalino-terreux, un élément du Groupe 13, un élément du Groupe 14, un élément du Groupe 15, un élément du Groupe 16, un élément de transition, un élément faisant partie des terres rares et leurs associations, mais ne représente pas Sn,
ou leurs associations.

8. Procédé pour la préparation d'une électrode négative pour une batterie au lithium rechargeable de la revendication 7, dans lequel l'agent de couplage du type silane comprend le méthacrylate de 3-méthoxysilylpropyle, le méthacrylate de 3-(triméthoxysilyl)propyle, le méthacrylate de 3-éthoxysilylpropyle, l'acrylate de 3-méthoxysilylpropyle, l'acrylate de 3-éthoxysilylpropyle, le méthacrylate de 3-méthoxysilylbutyle, le méthacrylate de 3-éthoxysilylbutyle, l'acrylate de 3-méthoxysilylbutyle, l'acrylate de 3-éthoxysilylbutyle, le méthacrylate de 3-méthoxysilylpentyle, le méthacrylate de 3-éthoxysilylpentyle, l'acrylate de 3-méthoxysilylpentyle, l'acrylate de 3-éthoxysilylpentyle, le méthacrylate de 3-méthoxysilylhexyle, le méthacrylate de 3-éthoxysilylhexyle, l'acrylate de 3-méthoxysilylhexyle, l'acrylate de 3-éthoxysilylhexyle, le méthacrylate de 3-méthoxysilylheptyle, le méthacrylate de 3-éthoxysilylheptyle, l'acrylate de 3-méthoxysilylheptyle, l'acrylate de 3-éthoxysilylheptyle, le méthacrylate de 3-méthoxysilyloctyle, le méthacrylate de 3-éthoxysilyloctyle, l'acrylate de 3-méthoxysilyloctyle, l'acrylate de 3-éthoxysilyloctyle, le méthacrylate de 3-méthoxysilylnonyle, le méthacrylate de 3-éthoxysilylnonyle, l'acrylate de 3-méthoxysilylnonyle ou l'acrylate de 3-éthoxysilylnonyle ou leurs associations.

9. Procédé pour la préparation d'une électrode négative pour une batterie au lithium rechargeable de la revendication 7 ou 8, dans lequel le monomère et l'oligomère comprennent chacun au moins un d'un groupe amino, d'un groupe acryle, d'un groupe vinyle, d'un groupe époxy et d'un groupe phényle.

10. Procédé pour la préparation d'une électrode négative pour une batterie au lithium rechargeable de l'une quelconque des revendications 7 à 9, dans lequel la matière active est incorporées en une quantité d'environ 3000 à environ 9000 parties en poids sur la base de 100 parties en poids de l'agent de couplage du type silane.

11. Procédé pour la préparation d'une électrode négative pour une batterie au lithium rechargeable de l'une quelconque des revendications 7 à 10, dans lequel le monomère et l'oligomère sont ajoutés en un rapport pondéral d'environ 1:9 à environ 9:1.

12. Procédé pour la préparation d'une électrode négative pour une batterie au lithium rechargeable de l'une quelconque des revendications 7 à 11, dans lequel la réaction de polymérisation est conduite par un procédé de photo-durcissement ou de thermo-durcissement.

13. Batterie au lithium rechargeable comprenant :
une électrode négative telle que définie dans l'une quelconque des revendications 1 à 6 ;
une électrode positive comprenant une matière active positive ; et
un électrolyte non aqueux.
